# EUROPÄISCHE PATENTSCHRIFT

(11) **EP 0 635 523 B1**
(45) Veröffentlichungstag und Bekanntmachung des Hinweises auf die Patenterteilung: **12.08.1998**
(21) Anmeldenummer: 94111031.4
(22) Anmeldetag: 15.07.1994
(51) Int. Cl.: C08F 220/32, C08F 220/04, C09D 133/14, C09D 133/02

(54) **Verfahren zur Herstellung von OH-Gruppen enthaltenden Copolymerisaten und deren Verwendung in festkörperreichen Beschichtungsmitteln**
Process for preparing copolymers containing OH groups and their use in high solids coatings
Procédé de préparation de copolymères contenant des groupes-OH, et leur usage dans des revêtements à haute teneur en solides

(30) Priorität: 23.07.1993 DE 4324801
(43) Veröffentlichungstag der Anmeldung: 25.01.1995
(73) Patentinhaber: HOECHST AKTIENGESELLSCHAFT, 65926 Frankfurt am Main (DE)
(72) Erfinder: Epple, Ulrich, Dr., D-65205 Wiesbaden (DE); Kubillus, Uwe, Dr., D-65195 Wiesbaden (DE); Brindöpke, Gerhard, Dr., D-65843 Sulzbach (DE); Dössel, Karl-Friedrich, Dr., D-65187 Wiesbaden (DE)
(74) Vertreter: Zounek, Nikolai, Dipl.-Ing.

(56) Entgegenhaltungen:
- EP-A- 0 027 931
- EP-A- 0 619 329
- WO-A-90/03991
- FR-A- 2 651 236
- US-A- 4 808 656

## Beschreibung

Der Vorteil von festkörperreichen ("high solid") Acrylatharzen ist in der Verringerung der Emission organischer Verbindungen bei Applikation des Lackes zu sehen. Um diese festkörperreichen Lackformulierungen zu erhalten, müssen entsprechende Acrylatharze mit niedrigen Viskositäten, d.h. geringen Molmassen, und engen Molmassenverteilungen eingesetzt werden.

Es ist wohl bekannt, daß zur Herstellung niedrigviskoser Polymerisate die radikalische Lösemittelpolymerisation eingesetzt werden kann (EP 408 858, EP 398 387, US 4 145 513). Der Nachteil dieses Verfahrens ist, daß die Eigenschaften der Polymerisate durch den Einsatz beträchtlicher Mengen Polymerisationsinitiatoren und Polymerisationsregler sowie deren Folgeprodukte, die teilweise nicht in die Polymerkette eingebaut werden, beeinträchtigt werden. Insbesondere können die verwendeten Polymerisationsregler, wie z.B. Thiole, übel riechen oder sogar giftig sein. Die Polymerisate, die mit Hilfe der radikalischen Lösemittelpolymerisation unter hohem Druck bzw. bei hoher Temperatur in hochsiedenden Lösemitteln erhalten werden, besitzen diese Nachteile nicht, weisen jedoch durch die zu geringen Molmassen bedingt zu niedrige Glasstufen auf, die den Einsatz als Bindemittel zur Beschichtung nicht erlauben. In den Beschichtungen zeigt sich dies dadurch, daß diese Materialien beliebig lange Staub- und Klebfreitrocknungszeiten besitzen können. Zusätzlich besitzen manche Systeme keine ausreichende Verarbeitungszeit für die kommerzielle Anwendung.

Andererseits ist auch die Polymerisation in Substanz bekannt. Der große Vorteil einer Substanzpolymerisation ist, daß in der Reaktionsmasse nur Monomeres, Polymeres und Initiator anwesend sind und daher sehr reine, lösungsmittelfreie Produkte entstehen. In der Praxis sind Beispiele für eine solche Polymerisation selten, weil sich durch das Freiwerden sehr großer Wärmemengen in kurzer Reaktionszeit die Polymerisation kaum kontrollieren läßt. Die EP 0 027 931 beschreibt ein solches Verfahren zur Herstellung von niedrigviskosen OH-Gruppen enthaltenden Copolymerisaten durch radikalische Umsetzung von
A) 10 bis 30 Gew.-% 12 bis 14 C-Atome enthaltenden Glycidylestern aliphatischer gesättigter Monocarbonsäuren mit einem tertiären oder quartären α-C-Atom und
B) 90 bis 70 Gew.% von mindestens zwei ungesättigten copolymerisierbaren Monomeren,
von denen mindestens eines mindestens eine COOH-Gruppe enthält, das dadurch gekennzeichnet ist, daß die Komponente A) vorgelegt und bei 130 bis 200 °C mit der Komponente B) und einem radikalischen Initiator in einer Substanzpolymerisation so lange umgesetzt wird, bis ein Umsetzungsgrad von mindestens 95, vorzugsweise mindestens 98 % erreicht ist, wobei die Komponente B) mindestens 3,3 Gew.% eines COOH-Gruppen aufweisenden Monomeren enthält. Der Hauptvorteil dieses Verfahrens besteht in der effizienten und raschen Abführung der Reaktionswärme im Laufe der Reaktion durch Vorlage der Komponente A). Die Komponente A), der Glycidylester, wirkt zunächst als Lösemittel und wird im Laufe der Reaktion vollständig in das Copolymerisationsprodukt eingebaut, so daß keine unumgesetzten störenden Bestandteile mehr im Endprodukt vorhanden sind.

Die meisten organischen Peroxide, insbesondere diejenigen, die sich von tertiären (t)Butylhydroperoxiden ableiten und dort in den Beispielen verwendet werden, sind durch die entsprechenden Radikale höchst reaktiv. Die freien Radikale, abgeleitet vom Typ t-Butylhydroperoxid, insbesondere Di-t-Butylperoxid, können Wasserstoff vom Acrylatpolymer abstrahieren, was zu Verzweigungen und damit zur Verbreiterung bzw. Multimodalität in der Molmassenverteilung führen kann. Dies wird bei den Produkten in der EP 0 027 931 beobachtet. Hierdurch erhöhen sich die Lösungsviskositäten der Produkte. Diese Effekte treten bevorzugt in Wechselwirkung mit den üblicherweise verwendeten Lösemitteln und Lösemittelgemischen auf.

Es war daher ein Copolymerisationsverfahren in Masse erwünscht, das lösemittelfreie, niedrigviskose, unimodal eng verteilte Acrylatharzpolymere liefert und das sich innerhalb eines breiten Temperaturbereiches durchführen läßt.

Bekannt ist, daß in Lösemittelpolymerisationen unimodal, eng verteilte "high solid" Acrylatpolymere durch den Gebrauch organischer Peroxide hergestellt werden können, die abgeleitet sind vom t-Amylhydroperoxid [V. R. Kamath and J. D. Sargent Jr., Paintindia 41 (1), 17 - 22 (Eng.) 1991; P.A. Callais, V. R. Kamath and M. G. Moskal, "Proc. Water-Borne, Higher-Solids, Powder Coat. Symp." (New Orleans), 19th, 156-70 (Eng.) 1992]. Es fehlt jedoch jeder Hinweis darauf, daß Acrylatpolymere dieser Art mit diesem Initiatorsystem auch ohne Gegenwart eines Lösemittels hergestellt werden können.

Die Erfindung betrifft Acrylat-Copolymerisate mit einer OH-Zahl von 50 bis 250 mg KOH/g, einer niedrigen Lösungsviskosität von 15 bis 2000 mPa·s (50 %ig, 23 °C), einer mittleren Molmasse (Gewichtsmittel M_{w}) von kleiner 8600 g/mol und einer Uneinheitlichkeit (M_{w}/Mₙ) [gewichtsmittlere Molmasse / zahlenmittlere Molmasse] kleiner als 3,4, und Verfahren zu ihrer Herstellung. Mit dem hier beschriebenen Verfahren werden solche Copolymere erstmals zugänglich.

Diese niedrigviskosen, unimodal eng verteilten, einheitlichen, OH-Gruppen enthaltenden Copolymerisate sind herstellbar durch die radikalische Umsetzung von
A) einem oder mehreren Glycidylestern von gesättigten aliphatischen Monocarbonsäuren mit einem tertiären oder quarternären α-C-Atom, und
B) mindestens zwei ungesättigten copolymerisierbaren Monomeren, von denen mindestens eines mindestens eine COOH-Gruppe enthält,
durch Verwendung eines oder mehrerer radikalbildender Initiatoren mit der Formel (I)

R₁-O-O-R₂, (I)

wobei
- R₁: Wasserstoff oder einen linearen oder verzweigten aliphatischen Acylrest mit 2 bis 15 C-Atomen oder R₂ bedeutet, und
- R₂: der Formel 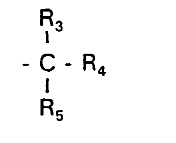 genügt, und
- R₃: einen linearen oder verzweigten Alkyl- oder Aralkylrest mit mindestens 2 C-Atomen,
- R₄ und R₅: gleich oder verschieden sind und einen linearen oder verzweigten Alkyl- oder Aralkylrest mit 1 bis 15 C-Atomen bedeuten.

Insbesondere erhält man vorteilhafte Produkte im Sinne der Erfindung, wenn
A) 5 bis 50 Gew.% 4 bis 30 C-Atome enthaltenden Glycidylestern aliphatischer gesättigter Monocarbonsäuren mit einem tertiären oder quarternären α-C-Atom und
B) 95 bis 50 Gew.% von mindestens zwei ungesättigten copolymerisierbaren Monomeren, von denen mindestens eines mindestens eine COOH-Gruppe enthält,
radikalisch copolymerisiert werden, wobei die Komponente A), der Glycidylester, vorgelegt und bei 100 bis 210°C mit der Komponente B) und mindestens einem speziellen radikalischen Initiator in einer Substanzpolymerisation so lange umgesetzt wird, bis ein Umsetzungsgrad von mindestens 95, vorzugsweise mindestens 97,5 % erreicht ist, und die Komponente B) mindestens 3,0 Gew.% eines COOH-Gruppen aufweisenden Monomeren enthält.

Diese COOH-Gruppen aufweisenden Monomeren müssen in einer solchen Menge angeboten werden, daß die Umsetzung mit der Komponente A) vollständig abläuft und eine Säurezahl von mindestens 3 mg KOH/g im hergestellten Produkt sich ergibt.

Für das erfindungsgemäße Verfahren werden spezielle radikalbildende Peroxy-Verbindungen als Polymerisationsinitiatoren eingesetzt. Diese speziellen Peroxy-lnitiatoren besitzen benachbart zur Peroxy-Gruppe mindestens ein tertiäres C-Atom, das drei lineare oder verzweigte Alkyl- oder Aralkylgruppen trägt, von denen mindestens eine mehr als 1 C-Atom zählt. Verbindungen dieser Art werden beschrieben durch die oben angegebene Formel (I).

Beispiele solcher Verbindungen sind t-Amylperoxy-2-ethylhexanoat, 1,1-Di-(t-Amylperoxy)cyclohexan, t-Amylperoxyacetat, Ethyl-3,3-di-(t-amylperoxy)-butyrat, Di-t-amylperoxid, 3-Ethyl-pent-3-yl-peroxy-2'-ethylhexanoat und Di-(3-ethyl-pent-3-yl)-peroxid. Der Anteil der Initiatoren kann z.B. 0,5 bis 5, vorzugsweise bis 4, insbesondere bis 3 Gew.%, bezogen auf das Gesamtgewicht der Ausgangskomponenten, betragen.

Als Komponente A) werden Glycidylester von α-Alkylalkanmonocarbonsäuren und/oder α,α-Dialkylalkanmonocarbonsäuren einzeln oder im Gemisch verwendet. Da dem Glycidylrest im Glycidylester der α-Alkylalkanmonocarbonsäuren und/oder α,α-Dialkylalkanmonocarbonsäuren die Summenformel C₃H₅O zukommt, sind die α-Alkylalkanmonocarbonsäuren und α,α-Dialkylalkansäuren Isomeren-Gemische von den entsprechenden Monocarbonsäuren.

Die Komponente B ist ein Gemisch von mindestens zwei olefinisch ungesättigten copolymerisierbaren Monomeren, von denen mindestens eines eine Carboxylgruppe enthält.

Geeignete olefinisch ungesättigte saure Monomere bei der Komponente B sind z.B. Acryl- und/oder Methacrylsäure und/oder Malein-, Fumar-, Itaconsäurehalbester, Malein-, Fumar-, Itaconsäure sowie Croton-, Isocroton-, Vinylessigsäure sowie ungesättigte Fettsäuren mit 8 bis 22 C-Atomen, wie z.B. Linolensäure, Linolsäure, Ölsäure, Arachidonsäure und Ricinenfettsäure.

Geeignete olefinisch ungesättigte Monomere ohne Carboxylgruppen sind z.B. Acryl- und/oder Methacrylsäureester aus einwertigen Alkoholen mit 1 bis 20 C-Atomen und die Hydroxyalkylester dieser Säuren, ferner Acrylnitril. Insbesondere geeignete Acrylester sind z.B. die Methyl-, Ethyl-, Propyl-, 2-Ethylhexyl-, Butyl-Isobutyl-, tert.-Butyl-, Hexyl-, Nonyl-, Lauryl- und Stearylester der Acryl- bzw. Methacrylsäure.

Beispiele für geeignete Hydroxyalkylester α,β-ungesättigter Carbonsäuren mit einer primären Hydroxylgruppe sind Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate. Als Beispiele für verwendbare Hydroxyalkylester mit einer sekundären Hydroxylgruppe seien 2-Hydroxypropylacrylat, 2-Hydroxybutylacrylat, 3-Hydroxybutylacrylat, Trimethylolpropandiacrylat und die entsprechenden Methacrylate genannt. Selbstverständlich können jeweils auch die entsprechenden Ester anderer α,β-ungesättigter Carbonsäuren wie z.B. der Crotonsäure und der Isocrotonsäure eingesetzt werden. Besonders bevorzugt werden Hydroxyethyl-, Hydroxypropyl- und Hydroxybutylacrylat, bzw. -methacrylat. Geeignet sind auch Umsetzungsprodukte aus z.B. einem Mol Hydroxyethylacrylat und/oder Hydroxyethylmethacrylat und durchschnittlich zwei Mol ε-Caprolacton.

Andere geeignete olefinisch ungesättigte Monomere sind vinylaromatische Kohlenwasserstoffe wie Styrol, (Alkylphenyl)ethene, z.B. α-Methylstyrol, α-Chlorstyrol und die verschiedenen Vinyltoluole.

Im Ausgangsmonomergemisch besteht die Komponente B) bevorzugt aus einem Gemisch von
B1) 3,3 bis 20, vorzugsweise 3,3 bis 15 Gew.% einer α,β-ungesättigten Monocarbonsäure, vorzugsweise Acryl- oder Methacrylsäure oder deren Mischungen,
B2) 0 bis 43, vorzugsweise 16 bis 43 Gew.% eines Hydroxyalkylesters der Acrylsäure oder Methacrylsäure oder dessen Mischungen,
B3) 0 bis 57, vorzugsweise 5 bis 45 Gew.% eines Esters der Acryl- oder Methacrylsäure mit einem einwertigen Alkohol mit 1 bis 20 C-Atomen oder dessen Mischungen,
B4) 0 bis 72, vorzugsweise 15 bis 55 Gew.% mindestens eines Vinylaromaten,
wobei die Summe der Komponenten B stets 100 und wobei die Summe der Ester bevorzugt nicht mehr als 85 Gew.% beträgt.

Während der Polymerisationsreaktion bildet sich aus den sauren Monomeren und dem vorgelegten Glycidylester ein Umsetzungsprodukt, das im erfindungsgemäß erhaltenen Copolymerisat im allgemeinen in einem Anteil von 6 bis 60, vorzugsweise 10 bis 55 Gew.% vorliegt.

Die Polymerisation erfolgt vorzugsweise als Substanzpolymerisation. Unter dem Begriff "Substanzpolymerisation" ist eine Polymerisation zu verstehen, die in der Regel ohne Lösemittel durchgeführt wird. In manchen Fällen ist jedoch auch die Anwesenheit von einem geringen Lösemittelanteil, nämlich bis zu 20, vorzugsweise bis zu 10 und insbesondere bis zu 8 Gew.%, bezogen auf die Ausgangskomponenten, möglich. Jedoch ist das Arbeiten ohne Lösemittel vorzuziehen.

Besonders bevorzugt ist eine Verfahrensweise, bei der zunächst mindestens eine Komponente gemäß (A) zu Beginn der Polymerisation vorgelegt wird und im weiteren Verlauf mindestens zwei ungesättigte copolymerisierbare Monomere (B) zugegeben werden, von denen mindestens eines eine COOH-Gruppe enthält. Die Komponente (A) wird während der Polymerisation vollständig in das Copolymerisat eingebaut.

Die auf diese Weise hergestellten hydroxylgruppenhaltigen Copolymerisate können in einer weiteren Stufe noch modifiziert werden, z.B. durch Umsetzen mit Isocyanat-Verbindungen, die pro Molekül durchschnittlich 0,8 bis 1,5 freie NCO-Gruppen und mindestens eine tertiäre Aminogruppe enthalten. Dann muß das bei der Polymerisation, also Herstellung der Polymeren, eingesetzte Lösungsmittel selbstverständlich gegenüber diesen Isocyanat-Verbindungen inert sein.

Diese Isocyanat-Verbindungen schließen beispielsweise auch alle niedermolekularen Harnstoffderivate ein, die in der Lackindustrie zu "sag controlled" Acrylatharzen führen.

Die erfindungsgemäßen Polymerisate zeichnen sich durch ihren Gehalt an OH-Gruppen aus. Sie weisen eine OH-Zahl von 50 bis 250, bevorzugt von 80 bis 200 und insbesondere von 90 bis 180 mg KOH/g auf. Weiterhin besitzen die Polymerisate eine besonders niedrige Lösungsviskosität. Im allgemeinen liegt sie im Bereich von 15 bis 2000, vorzugsweise 20 bis 700 und insbesondere 25 bis 500 mPa·s (gemessen an einer 50 %igen Lösung in Butylacetat oder einem Gemisch aus 3 Teilen Butylacetat und 4 Teilen Xylol bei 23 °C nach DIN 53 018). Die erfindungsgemäßen Polymerisate besitzen mittlere Molmassen (Gewichtsmittel) von kleiner 8600 g/mol und eine Uneinheitlichkeit von kleiner als 3,4, insbesondere kleiner als 3,2.

Eines der wesentlichen Unterscheidungsmerkmale zwischen einem synthetischen Hochpolymeren und einem niedermolekularen Stoff ist die Tatsache, daß man einem Polymeren keine exakte Molmasse zuordnen kann. Dies ist eine Folge davon, daß bei Polyreaktionen die Länge der gebildeten Kette lediglich von statistischen Ereignissen bestimmt wird. Wegen der statistischen Natur des Wachstumsprozesses ist es unvermeidlich, daß Ketten verschiedener Länge gebildet werden, also sozusagen eine Verteilung von Kettenlängen. Die Gelpermeationschromatographie (abgekürzt GPC) ist in den letzten Jahren zu einer häufig verwendeten Methode für die Bestimmung von Molmassen und deren Verteilungen geworden. Diese meist mit Polystyrol geeichte Methode liefert eine zahlenmittlere Mₙ und eine gewichtsmittlere M_{w} Molmasse. Die Breite der Verteilung kann oft durch Berechnung der Uneinheitlichkeit (M_{w}/Mₙ) abgeschätzt werden. Je näher dieser Quotient an 1 ist, desto physikalisch einheitlicher ist das Polymer. Einheitlichere Polymere weisen in lacktechnischer Hinsicht Vorteile in der Trocknung und der Härte auf.

Die erfindungsgemäßen Copolymerisate eignen sich besonders gut für lacktechnische Anwendungen in 2-Komponenten-Systemen, insbesondere für sogenannte "high-solid"-Systeme, also für lösemittelhaltige Mischungen mit hohem Festkörpergehalt.

Geeignete Lösemittel für die erfindungsgemäß erhaltenen Produkte sind z.B. aliphatische, cycloaliphatische und/oder aromatische Kohlenwasserstoffe, wie Alkylbenzole, z.B. Xylol, Toluol; Ester, wie Ethylacetat, Butylacetat, Acetate mit längeren Alkoholresten, Butylpropionat, Pentylpropionat, Ethylenglykolmonoethyletheracetat, das entsprechende Methyletheracetat; Ether, wie Ethylenglykolacetatmonoethyl-, methyl- oder butylether; Glykole; Alkohole; Ketone wie Methylamylketon, Methylisobutylketon; Lactone oder dergleichen sowie Gemische dieser Lösemittel.

Gegenstand der vorliegenden Erfindung sind weiterhin Beschichtungsmittel, die die erfindungsgemäßen Copolymerisate als Bindemittelkomponente enthalten. Die Copolymerisate können in Gegenwart von geeigneten Vernetzern kalt oder bei erhöhter Temperatur gehärtet werden.

Als Härterkomponente eignen sich in diesen Beschichtungsmitteln Aminoplastharze, Polyisocyanate oder Anhydridgruppen enthaltende Verbindungen einzeln oder in Kombination. Der Vernetzer wird jeweils in solch einer Menge zugesetzt, daß das Molverhältnis der OH-Gruppen des Copolymerisats zu den reaktiven Gruppen des Vernetzers zwischen 0,3 : 1 und 3 : 1 liegt.

Als Härterkomponente geeignete Aminoplastharze sind bevorzugt Harnstoff-, Melamin- und/oder Benzoguanaminharze. Es handelt sich hierbei um veretherte Hamstoff-, Melamin- bzw. Benzoguanamin-Formaldehyd-Kondensationsprodukte. Geeignete Mischungsverhältnisse liegen im Bereich von 50 : 50 bis 90 : 10 Copolymerisat /Aminoharzvernetzer auf Festharz bezogen. Geeignete Phenolharze und ihre Derivate können auch als Härter eingesetzt werden. Diese Vernetzer führen in Gegenwart von Säuren, z.B. p-Toluolsulfonsäure zur Aushärtung der Beschichtung. Die Heißhärtung kann in üblicher Weise bei Temperaturen von 90 bis 200°C, z.B. in 10 bis 30 Minuten vorgenommen werden.

Für die Härtung der erfindungsgemäßen Produkte unter Vernetzung eignen sich Polyisocyanate, besonders bei moderaten Temperaturen bzw. bei Raumtemperatur. Als Polyisocyanatkomponente kommen im Prinzip alle aus der Polyurethanchemie bekannten aliphatischen, cycloaliphatischen oder aromatischen Polyisocyanate einzeln oder in Mischungen in Betracht. Beispielsweise gut geeignet sind niedermolekulare Polyisocyanate wie beispielsweise Hexamethylendiisocyanat, 2,2,4- und/oder 2,4,4-Trimethyl-1,6-hexamethylendiisocyanat, Dodecamethylendiisocyanat, Tetramethyl-p-xylylendiisocyanat, 1,4-Diisocyanatocyclohexan, 1-Isocyanato-3,3,5-trimethyl-5-isocyanatomethylcyclohexan (IPDI), 2,4'- und/oder 4,4'-Diisocyanato-dicyclohexylmethan, 2,4'-und/oder 4,4'-Diisocyanato-diphenylmethan oder Gemische dieser Isomeren mit ihren höheren Homologen, wie sie in an sich bekannter Weise durch Phosgenierung von Anilin/Formaldehyd-Kondensaten zugänglich sind, 2,4- und/oder 2,6-Diisocyanatotoluol oder beliebige Gemische derartiger Verbindungen.

Bevorzugt werden jedoch Derivate dieser einfachen Polyisocyanate eingesetzt, wie sie in der Beschichtungstechnologie üblich sind. Hierzu gehören Polyisocyanate, die beispielsweise Biuretgruppen, Uretdiongruppen, Isocyanurat-gruppen, Urethangruppen, Carbodiimidgruppen oder Allophanatgruppen aufweisen, wie sie z.B. in der EP 0 470 461 beschrieben werden.

Zu den besonders bevorzugten modifizierten Polyisocyanaten gehören das N,N',N"-Tris-(-6-isocyanatohexyl)-biuret und seine Gemische mit seinen höheren Homologen, sowie das N,N',N"-Tris-(-6-isocyanatohexyl)-isocyanurat bzw. dessen Gemische mit seinen höheren, mehr als einen Isocyanuratring aufweisenden Homologen.

Die Vernetzung kann durch Zusatz von organischen Metallverbindung, wie Zinnverbindungen und gegebenfalls tertiären Aminen, vorzugsweise Diethylethanolamin, katalysiert werden. Entsprechende Zinnverbindungen sind beispielsweise Dibutylzinndilaurat, Dibutylzinndiacetat und Dibutyloxozinn. Für eine Härtung bei erhöhter Temperatur kommen zusätzlich verkappte Polyisocyanate, Polycarbonsäuren bzw. deren Anhydride in Frage.

Die erfindungsgemäßen Copolymerisate eignen sich besonders gut zur Herstellung von festkörperreichen, lösemittelhaltigen Klarlacken. Außerdem eignen sie sich gut zur Herstellung von Pulverlacken in Verbindung mit Polycarbonsäureanhydriden. Sie lassen sich zur Umsetzung mit Polycarbonsäureanhydriden und zur Weiterverwendung der so erhaltenen Produkte als Härter für verschiedene Kunstharze, insbesondere Epoxyharze, einsetzen. Von besonderem Interesse ist die Verwendung der erfindungsgemäßen Produkte zusammen mit speziellen Polycarbonsäureteilestern oder Derivaten von Polycarbonsäuren bzw. deren Anhydriden oder Esteranhydriden.

Bevorzugte Polycarbonsäurederivate sind z.B. Polyanhydride, die sich von mindestens vierwertigen Carbonsäuren herleiten und mit denen die erfindungsgemäßen Produkte umgesetzt werden können. Diese Systeme sind wegen ihrer hohen Reaktivität insbesondere für eine Kalthärtung interessant.

In Beschichtungsmitteln, die mit den erfindungsgemäßen Copolymerisaten hergestellt werden, können auch andere in der Beschichtungstechnologie übliche Hilfs- und Zusatzmittel enthalten sein, die bisher noch nicht genannt sind. Hierzu gehören insbesondere Katalysatoren, Verlaufsmittel, Silikonöle, Weichmacher, wie Phosphorsäureester und Phthalsäureester, Pigmente wie Eisenoxide, Bleioxide, Bleisilikate, Titandioxid, Bariumsulfat, Zinksulfid, Phthalocyaninkomplexe etc. und Füllstoffe wie Talkum, Glimmer, Kaolin, Kreide, Quarzmehl, Asbestmehl, Schiefermehl, verschiedene Kieselsäuren, Silikate etc., viskositätskontrollierende Zusätze, Mattierungsmittel, UV-Absorber und Lichtschutzmittel, Antioxidantien und/oder Peroxidzersetzer, Entschäumer und/oder Netzmittel, aktive Verdünner und dergleichen.

Die Beschichtungsmittel können nach bekannten Methoden, beispielsweise durch Streichen, Tauchen, Fluten oder mit Hilfe von Walzen oder Rakeln, insbesondere aber durch Spritzen auf das jeweilige Substrat aufgetragen werden. Sie können in der Wärme appliziert werden, gegebenenfalls können sie durch Eindrücken von superkritischen Lösemitteln (z.B. CO₂) in eine applikationsfertige Form gebracht werden. Autoreparaturlacke mit ausgezeichneten Eigenschaften lassen sich mit Bindemitteln erhalten, die mit den erfindungsgemäßen Copolymerisaten hergestellt werden. Diese Bindemittel können sowohl zur Herstellung von Zwischenschichten als auch von pigmentierten oder unpigmentierten Decklacken eingesetzt werden. Ausdrücklich soll auf die vorzügliche Eignung dieser Bindemittelkombinationen in Zweikomponenten-Autoreparaturlacken hingewiesen werden.

Hierzu werden die Lacke im allgemeinen innerhalb des Temperaturbereichs von -20 bis + 100°C, vorzugsweise von -10 bis + 60°C ausgehärtet. Die Erfindung wird in den folgenden Beispielen näher erläutert. In den Ausführungsbeispielen beziehen sich alle Prozentangaben auf das Gewicht.

### Beispiele:

### I.) Herstellung der Copolymerisate

In einem mit Rührwerk, Inertgaseinleitung, Heiz- und Kühlsystem sowie einer Zugabeeinrichtung ausgestatteten Reaktor wird der Glycidylester einer α,α-Dialkylalkanmonocarbonsäure [z.B. Glycidylester der Versatic 10 Säure (Handelsname: Cardura® E 10, Shell Chemicals)] (z.T. mit Lösemittel oder Lösemittelgemischen) vorgelegt und unter Inertgas auf die gewünschte Temperatur aufgeheizt. Dann wird innerhalb 6 Stunden die Monomerenmischung (z.T. mit Lösemittel oder Lösemittelgemischen) zusammen oder getrennt mit dem speziellen Initiator (z.T. in Lösemittel oder Lösemittelgemischen) gleichmäßig zudosiert. Anschließend wird noch 2 Stunden nachpolymerisiert, bis ein Umsatz von mindestens 95 % erreicht ist.

Die Copolymerisate werden in geeigneten Lösemitteln oder Lösemittelgemischen angelöst.

Es werden folgende Copolymerisate hergestellt. Die genauen Ansätze in Gewichtsteilen, Reaktionsbedingungen und Kennzahlen der Produkte sind aus nachstehenden Tabellen zu entnehmen.

**Tabelle 1:**

| Herstellung und Eigenschaften der Copolymerisate A | | | |
|---|---|---|---|
| Ansatz | Vergleich | 1 | 2 |
| organische Verbindungen | | | |
| Glycidylester | 13.03 | 13.03 | 13.03 |
| Acrylsäure | 4.14 | 4.14 | 4.14 |
| Hydroxyethylmethacrylat | 28.08 | 28.08 | 28.08 |
| Methylmethacrylat | 7.58 | 7.58 | 7.58 |
| Styrol | 47.17 | 47.17 | 47.17 |
| Initiator | A | B | C |
| | Di-t-Butylperoxid | t-Amylperoxy-2-ethylhexanoat | Di-t-Amylperoxid |
| | 1.51 | 2.47 | 1.84 |
| Polymerisationstemperatur (°C) | 185 | 185 | 185 |
| FK (X) nach Polymerisation | 98.4 | 98.2 | 97.9 |
| FK (X) Lff. (in Butylacetat) | 70.3 | 69.4 | 70 |
| Säurezahl (mg KOH/g FH) | 8.1 | 5.9 | 5.8 |
| Hydroxylzahl (mg KOH(g FH) | 143 | 140 | 136 |
| Viskosität (mPa s), 23°C (Lff.) | 10820 | 8300 | 4440 |
| Viskosität (mPa s), 23°C (50%ig in BuAc/Xylol 3:4) | 177 | 145 | 106 |
| GPC (PS-Eichung) | | | |
| Mw (g/mol) | 8700 | 6830 | 5450 |
| Mn (g/mol) | 2560 | 2530 | 2260 |
| U = Mw / Mn | 3.4 | 2.7 | 2.4 |
| Hazen-Farbzahl (Lovibond) | 100 | 90 | 100 |
| Aussehen | transparent | transparent | transparent |
| FK: Festkörper | | | |
| FH: Festharz | | | |
| Lff: Lieferform | | | |

### Initiatoren:

| | | |
|---|---|---|
| A | Di-t-Butylperoxid: Trigonox® B | (AKZO) |
| B | t-Amylperoxy-2-ethylhexanoat: Trigonox® 121 | (AKZO) |
| C | Di-t-Amylperoxid: Interox® DTAP | (Peroxid-Chemie) |

- GPC:: <Mw> , <Mn> Millipore® Waters Chromatographie System 860
- Pumpe:: Waters Model 590, Rl-Detektor: Waters Model 410
- Säulensatz:: Waters Ultrastyragel 1 x 1000 Å + 1 x 500 Å + 1 x 100 Å (Ångström)
- Lösungsmittel:: Tetrahydrofuran bei 40°C
- Durchfluß:: 1 ml/min., Konzentration: 1 %ig auf Festkörper
- Kalibrierung:: Polystyrol (Fa. PSS, Mainz)

- Bestimmung der Kenndaten:: Säurezahl, Hydroxylzahl und Viskosität (Normen siehe "Analytische Bestimmungsmethoden" (Broschüre: Kunstharze Hoechst AG, Ausgabe 1982)) Hazen-Farbzahl (Lovibond) nach DIN 53 409

Die hergestellten A-Produkte 1 und 2 weisen niedrigere gewichtsmittlere Molmassen auf. Die Gelpermeationschromatogramme weisen keine hochmolekularen Schultern auf, dies zeigt sich in einer geringeren Uneinheitlichkeit.

Mit den niedrigeren Molmassen und der höheren Einheitlichkeit geht eine Reduzierung der Lieferformviskosität (nach Ubbelohde) einher.

**Tabelle 2:**

| Herstellung und Eigenschaften der Copolymerisate B | | | |
|---|---|---|---|
| Ansatz | Vergleich | 1 | 2 |
| organische Verbindungen | | | |
| | | | |
| Glycidylester | 19,70 | 19,70 | 19,70 |
| Acrylsäure | 6,87 | 6,87 | 6,87 |
| Hydroxyethylmethacrylat | 16,26 | 16,26 | 16,26 |
| Methylmethacrylat | 24,34 | 24,34 | 24,34 |
| Styrol | 32,83 | 32,83 | 32,83 |
| Initiator | A | B | C |
| | Di-t-Butylperoxid | t-Amylperoxy-2-ethylhexanoat | Di-t-Amylperoxid |
| | | | |
| | 1,50 | 2,41 | 1,78 |
| Polymerisationstemperatur (°C) | 160 | 160 | 160 |
| FK (%) nach Polymerisation | 98,5 | 97,6 | 98,8 |
| FK (%) Lff. (in Butylacetat) | 70,4 | 69,7 | 69,8 |
| Säurezahl (mg KOH/g FH) | 13,0 | 11,2 | 10,8 |
| Hydroxylzahl (mg KOH/g FH) | 112 | 115 | 110 |
| Viskosität (mPa s), 23°C (Lff.) | 13540 | 10650 | 9130 |
| Viskosität (mPa s), 23°C (50%ig in BuAc) | 172 | 137 | 118 |
| GPC (PS-Eichung) | | | |
| Mw (g/mol) | 11750 | 8440 | 7870 |
| Mn (g/mol) | 3180 | 2910 | 2890 |
| U = Mw / Mn | 3,7 | 2,9 | 2,7 |
| Hazen-Farbzahl (Lovibond) | 150 | 80 | 80 |
| Aussehen | transparent | transparent | transparent |

### Initiatoren:

| | | |
|---|---|---|
| A | Di-t-Butylperoxid: Trigonox® B | (AKZO) |
| B | t-Amylperoxy-2-ethylhexanoat: Trigonox® 121 | (AKZO) |
| C | Di-t-Amylperoxid: Interox® DTAP | (Peroxid-Chemie) |

- GPC:: <Mw>, <Mn> Millipore® Waters Chromatographie System 860
- Pumpe:: Waters Model 590, Rl-Detektor: Waters Model 410
- Säulensatz:: Waters Ultrastyragel 1 x 1000 Å + 1 x 500 Å + 1 x 100 Å (Ångström)
- Lösungsmittel:: Tetrahydrofuran bei 40 °C
- Durchfluß:: 1 ml/min., Konzentration: 1 %ig auf Festkörper
- Kalibrierung:: Polystyrol (Fa. PSS, Mainz)

- Bestimmung der Kenndaten:: Säurezahl, Hydroxylzahl und Viskosität (Normen siehe "Analytische Bestimmungsmethoden" (Broschüre: Kunstharze Hoechst AG, Ausgabe 1982)) Hazen-Farbzahl (Lovibond) nach DIN 53 409

Die hergestellten B-Produkte 1 und 2 weisen niedrigere gewichtsmittlere Molmassen auf. Die Gelpermeationschromatogramme weisen keine hochmolekularen Schultern auf, diese zeigt sich in einer geringeren Uneinheitlichkeit.

Mit den niedrigeren Molmassen und der höheren Einheitlichkeit geht eine Reduzierung der Lieferformviskosität (nach Ubbelohde) einher.

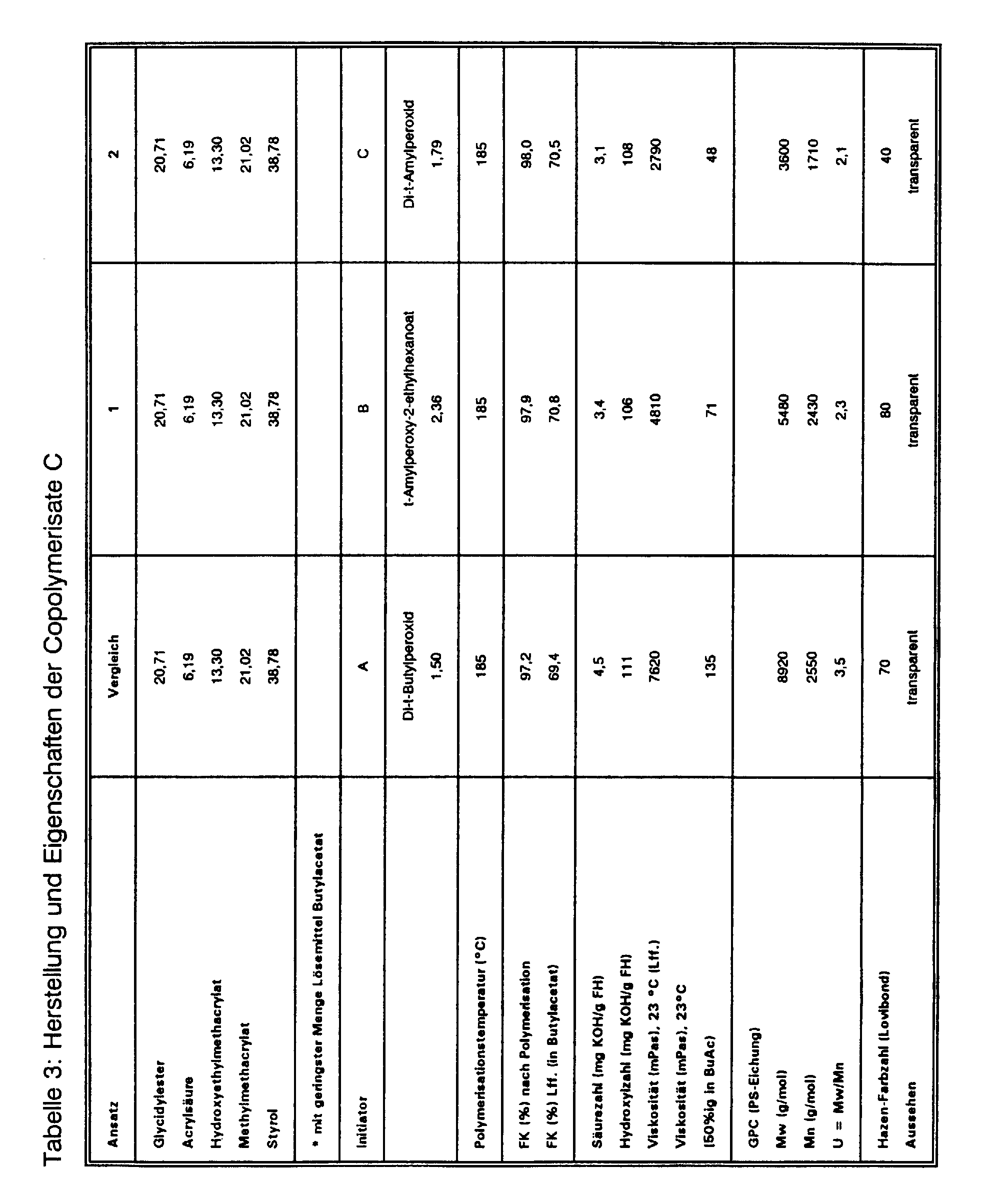

### Initiatoren:

| | | |
|---|---|---|
| A | Di-t-Butylperoxid: Trigonox® B | (AKZO) |
| B | t-Amylperoxy-2-ethylhexanoat: Trigonox® 121 | (AKZO) |
| C | Di-t-Amylperoxid: Interox® DTAP | (Peroxid-Chemie) |

- GPC:: <Mw>, <Mn> Millipore® Waters Chromatographie System 860
- Pumpe:: Waters Model 590, Rl-Detektor: Waters Model 410
- Säulensatz:: Waters Ultrastyragel 1 x 1000 Å + 1 x 500 Å + 1 x 100 Å (Ångström)
- Lösungsmittel:: Tetrahydrofuran bei 40°C
- Durchfluß:: 1 ml/min., Konzentration: 1 %ig auf Festkörper
- Kalibrierung:: Polystyrol (Fa. PSS, Mainz)

- Bestimmung der Kenndaten:: Säurezahl, Hydroxylzahl und Viskosität (Normen siehe "Analytische Bestimmungsmethoden" (Broschüre: Kunstharze Hoechst AG, Ausgabe 1982)) Hazen-Farbzahl (Lovibond) nach DIN 53 409

Die hergestellten C-Produkte 1 und 2 weisen niedrigere gewichtsmittlere Molmassen auf. Die Gelpermeationschromatogramme weisen keine hochmolekularen Schultern auf, dies zeigt sich in einer geringeren Uneinheitlichkeit.

Mit den niedrigeren Molmassen und der höheren Einheitlichkeit geht eine Reduzierung der Lieferformviskosität (nach Ubbelohde) einher.

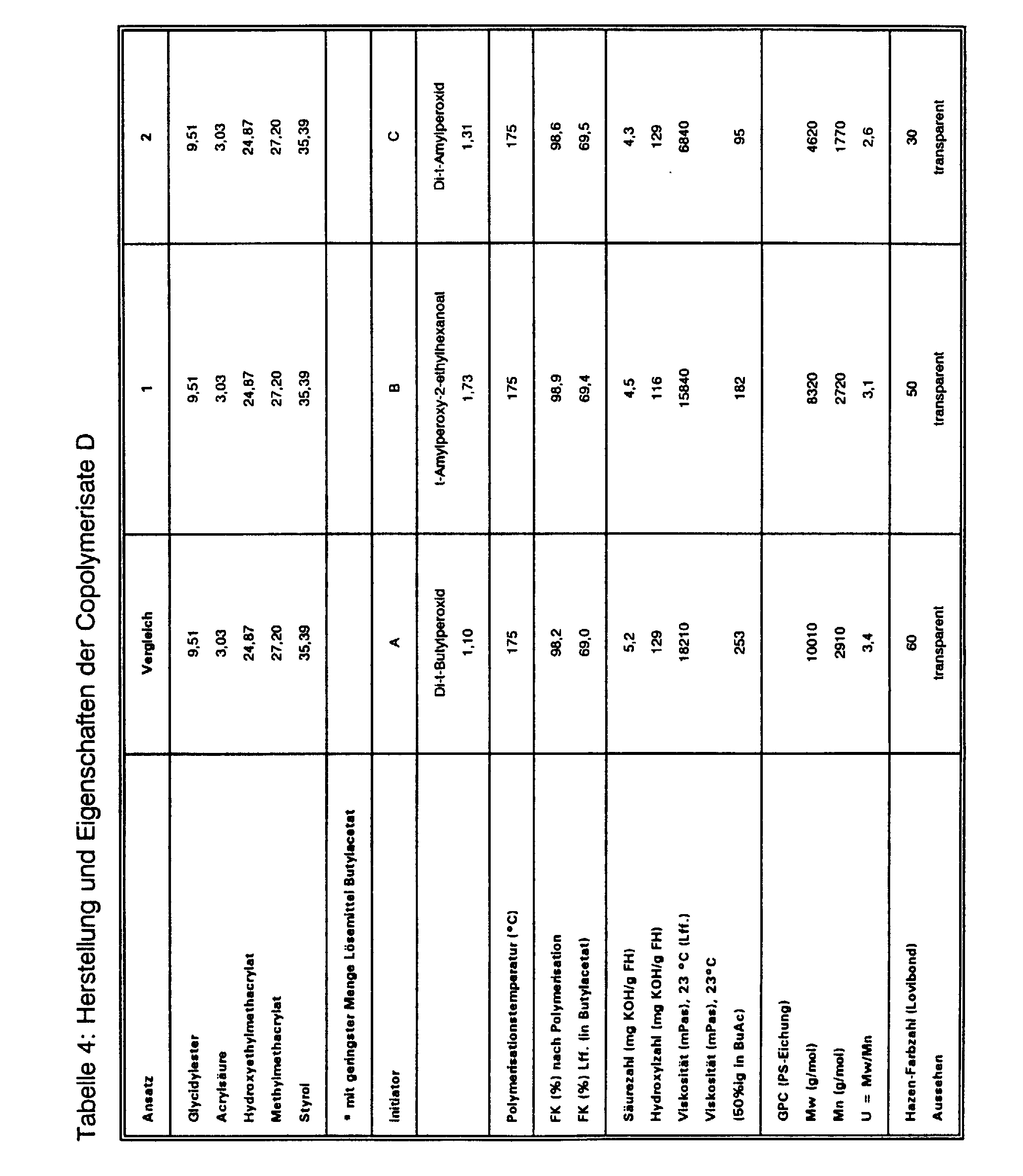

### Initiatoren:

| | | |
|---|---|---|
| A | Di-t-Butylperoxid: Trigonox® B | (AKZO) |
| B | t-Amylperoxy-2-ethylhexanoat: Trigonox® 121 | (AKZO) |
| C | Di-t-Amylperoxid: Interox® DTAP | (Peroxid-Chemie) |

- GPC:: <Mw>, <Mn> Millipore® Waters Chromatographie System 860
- Pumpe:: Waters Model 590, Rl-Detektor: Waters Model 410
- Säulensatz:: Waters Ultrastyragel 1 x 1000 Å + 1 x 500 Å + 1 x 100 Å (Ångström)
- Lösungsmittel:: Tetrahydrofuran bei 40°C
- Durchfluß:: 1 ml/min., Konzentration: 1 %ig auf Festkörper
- Kalibrierung:: Polystyrol (Fa. PSS, Mainz)

- Bestimmung der Kenndaten:: Säurezahl, Hydroxylzahl und Viskosität (Normen siehe "Analytische Bestimmungsmethoden" (Broschüre: Kunstharze Hoechst AG, Ausgabe 1982)) Hazen-Farbzahl (Lovibond) nach DIN 53 409

Die hergestellten D-Produkte 1 und 2 weisen niedrigere gewichtsmittlere Molmassen auf. Die Gelpermeationschromatogramme weisen keine hochmolekularen Schultern auf, dies zeigt sich in einer geringeren Uneinheitlichkeit.

Mit den niedrigeren Molmassen und der höheren Einheitlichkeit geht eine Reduzierung der Lieferformviskosität (nach Ubbelohde) einher.

### II.) Herstellung der Lacke

Zur Herstellung der erfindungsgemäßen härtbaren Beschichtungsmittel werden die Komponenten bestehend aus einem erfindungsgemäßen Copolymerisat oder einer Mischung mehrerer erfindungsgemäßer Copolymerisate mit den Hilfs- und Zusatzstoffen, Lösungsmitteln und Vernetzern im beschriebenen Mischungsverhältnis (Tabellen 5,6) gemischt und mit weiterem Verdünnungsmittel auf die Spritzviskosität von 21 bis 22 Sekunden mit dem Auslaufbecher (DIN 52 211, 4 mm, 23°C) eingestellt. Bei Komponenten mit niedriger Viskosität kann dies in Substanz erfolgen, wobei gegebenenfalls auf höhere Temperaturen erwärmt wird. Produkte höherer Viskosität werden - falls die härtbaren Mischungen nicht als Pulverlack eingesetzt werden - vor der Mischung in den erwähnten Verdünnungsmitteln gelöst oder dispergiert. Im Falle von pigmentierten Systemen wird zunächst in einem Dispergierschritt aus den entsprechenden Pigmenten zusammen mit dem erfindungsgemäßen Copolymerisat oder einer Mischung mehrerer erfindungsgemäßer Copolymerisate evtl. unter Zusatz eines geeigneten speziellen Anreibeharzes in einem Dispergieraggregat geeigneter Bauweise eine Pigmentpaste erzeugt. Diese wird so oder unter Zugabe weiteren Bindemittels auf Basis der Komponenten oder einer Mischung derselben oder aber eines Fremdharzes, das mit den übrigen Komponenten des betreffenden Lacksystems verträglich ist, gemischt und unter Zufügung weiterer Verdünnungsmittel oder lacktypischer Zusätze komplettiert. Die Topfzeit und die Eigenschaften der resultierenden Filme hängen dabei von den Verfahrensbedingungen ab, d.h. von der Art und Menge der Ausgangsstoffe, Dosierung des Katalysators, der Temperaturführung etc., die Härtung kann diskontinuierlich betrieben oder kontinuierlich durchgeführt werden, beispielsweise mittels einer automatischen Lackiervorrichtung.

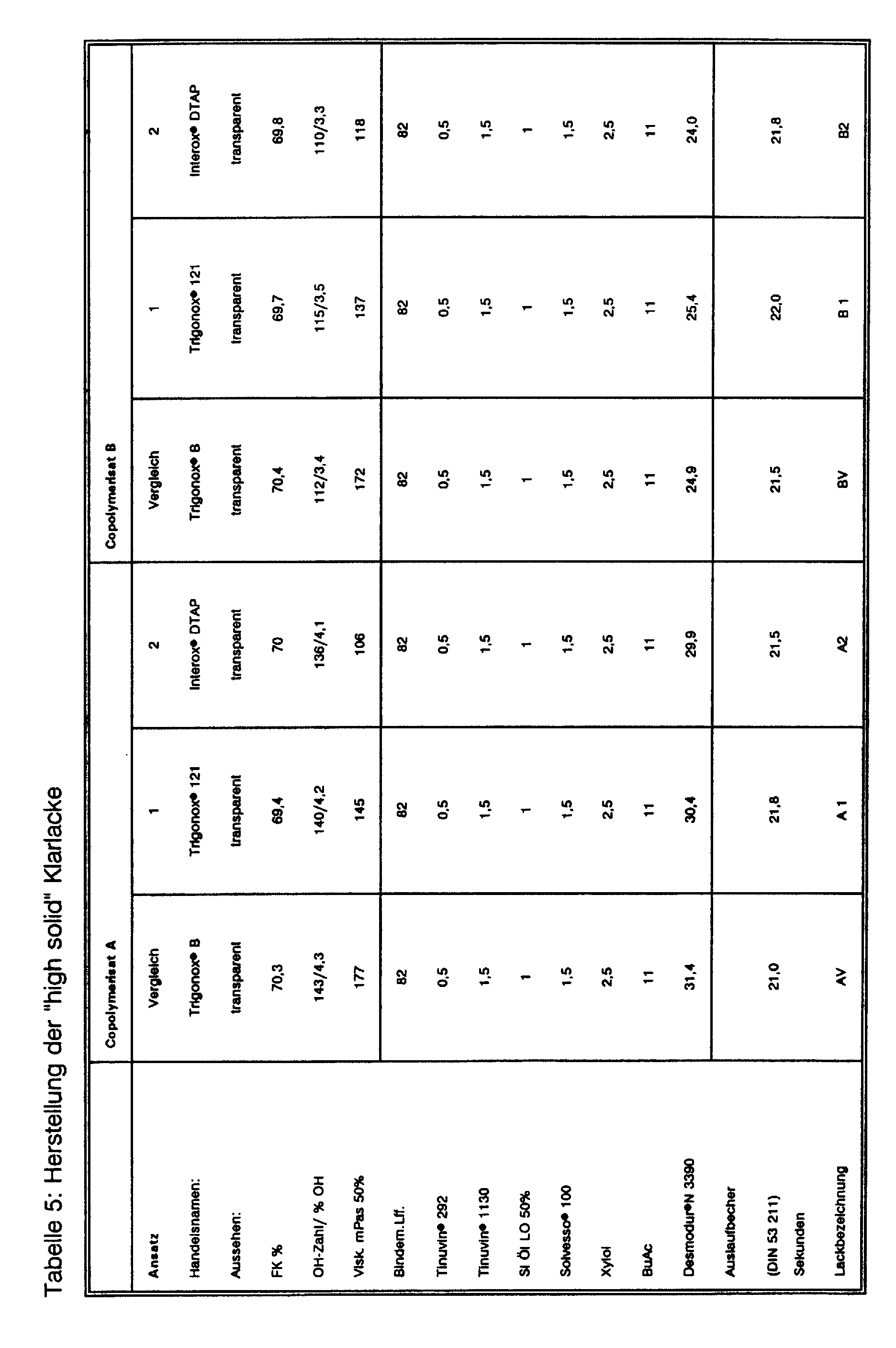

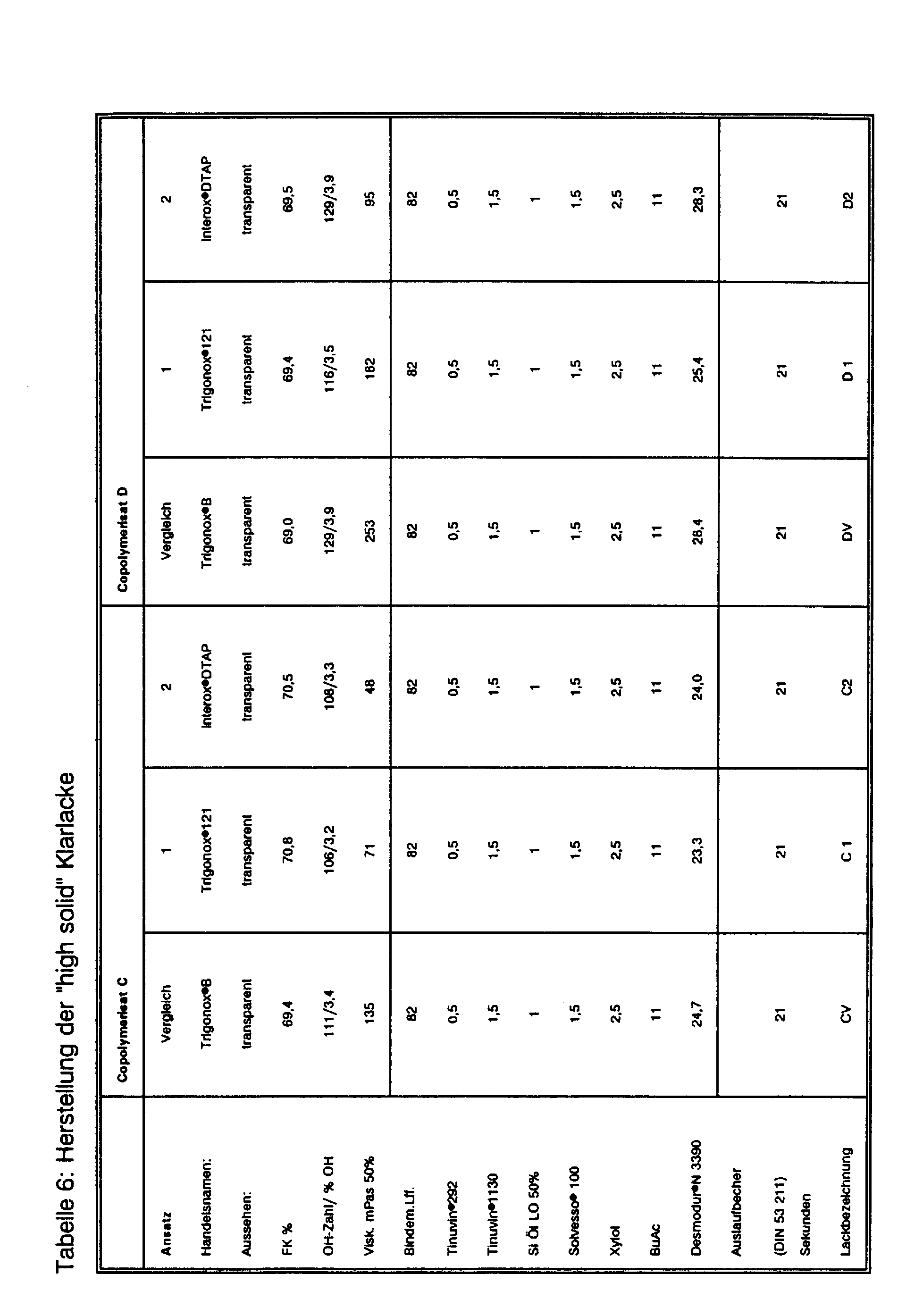

- Tinuvin®292 "HALS": (Fa. Ciba Geigy, Basel)
- Tinuvin® 1130: UV-Absorber(Fa. Ciba Geigy, Basel)
- Si Öl LO 50%: Verlaufsmittel (Silikonöl der Fa. Wacker GmbH, Burghausen)
- Desmodur® N 3390: Isocyanurat-Gruppen aufweisendes Polyisocyanat (Fa. Bayer AG, Leverkusen)
- BuAc: Butylacetat

### III.) Lacktechnische Prüfung

Die wie in II gefertigten Lacksysteme sind mittels 100 µm Rakel auf gereinigte Glasplatten appliziert und unter den Bedingungen der Lufttrocknung und forcierter Trocknung (45 Minuten bei 60°C) geprüft worden.

Die Ergebnisse können den Tabellen 7 und 8 entnommen werden. Lacke auf Basis DTAP-initiierter Produkte zeichnen sich durch einen um ca. 2 - 4 % höheren Lackfestkörpergehalt, eine gleich gute oder schnellere Staubtrocknung, eine reduzierten Klebfreitrockendauer und vergleichbare oder verbesserte Filmhärte aus. Die Benzinbeständigkeit entspricht dem bekannten hohen Niveau.

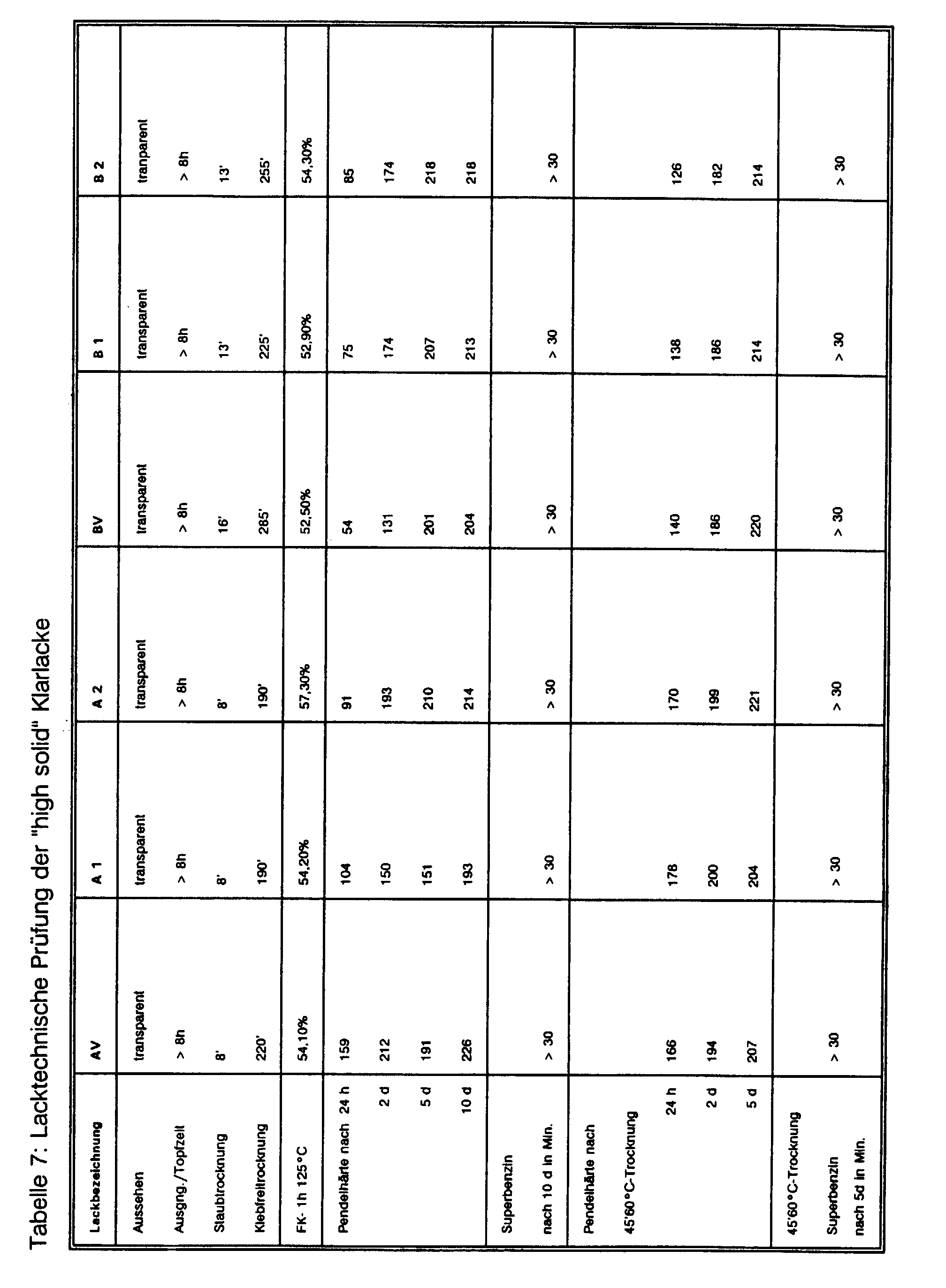

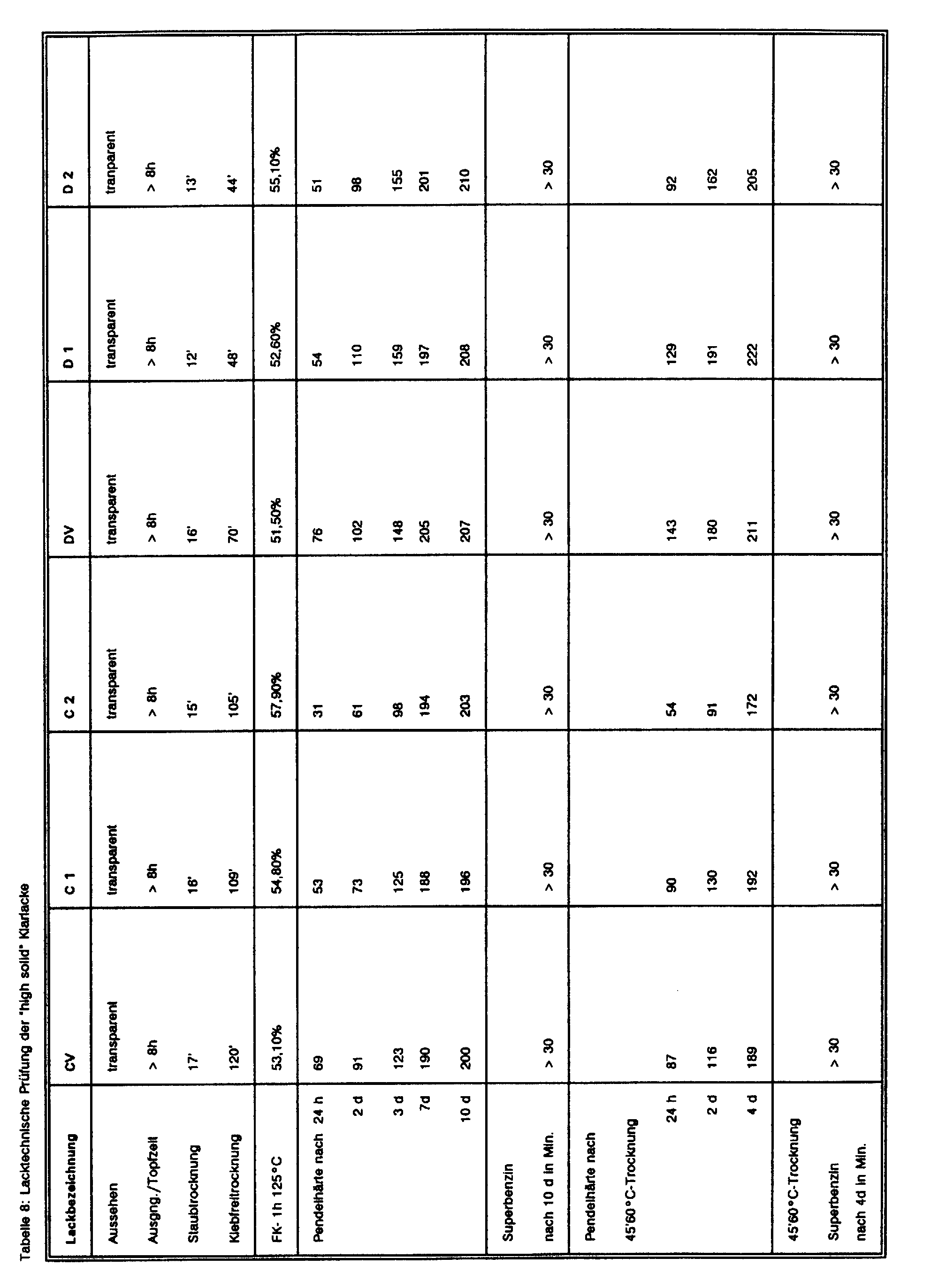

## Patentansprüche

1. Copolymerisate aus
A) einem oder mehreren Glycidylestern von gesättigten aliphatischen Monocarbonsäuren mit einem tertiären oder quarternären α-C-Atom, und
B) mindestens zwei ungesättigten copolymerisierbaren Monomeren, von denen mindestens eines mindestens eine COOH-Gruppe enthält,
mit einer OH-Zahl von 50 bis 250 mg/g, einer Lösungsviskosität (50 %ig, 23 °C) von 15 bis 2000 mPa s, einer mittleren Molmasse (Gewichtsmittel) Mw von kleiner als 8600 g/mol und einer unimodalen, engen Molmassenverteilung mit einer Uneinheitlichkeit von kleiner als 3,4, herstellbar durch Verwendung eines oder mehrerer radikalbildender Initiatoren mit der Formel
R₁-O-O-R₂,
wobei
R₁ Wasserstoffoder einen linearen oder verzweigten aliphatischen Acylrest mit 2 bis 15 C-Atomen oder R₂ bedeutet, und
R₂ der Formel 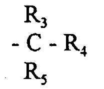 genügt, und
R₃ einen linearen oder verzweigten Alkyl- oder Aralkylrest mit mindestens 2 C-Atomen,
R₄ und R₅ gleich oder verschieden sind und einen linearen oder verzweigten Alkyl- oder Aralkylrest mit 1 bis 15 C-Atomen bedeuten.

2. Copolymerisate nach Anspruch 1 aus
A) 5 bis 50 Gew.% eines oder mehrerer Glycidylester von gesättigten aliphatischen Monocarbonsäuren mit einem tertiären oder quarternären α-C-Atom, die 4 bis 30 C-Atome enthalten, und
B) 95 bis 50 Gew.% von mindestens zwei ungesättigten copolymerisierbaren Monomeren, von denen mindestens eines mindestens eine COOH-Gruppe enthält.

3. Copolymerisate nach Anspruch 1, herstellbar durch Vorlegen der Komponente A und anschließende Umsetzung mit der Komponente B in Gegenwart von mindestens einem radikalbildenden Initiator.

4. Copolymerisate nach Anspruch 1, dadurch gekennzeichnet, daß die Komponente B aus einem Gemisch von einem oder mehreren Acrylmonomeren mit mindestens einer COOH-Gruppe und einem oder mehreren vinylaromatischen Kohlenwasserstoffen besteht.

5. Copolymerisate nach Anspruch 1, dadurch gekennzeichnet, daß die Komponente B aus einem Gemisch von
B1) 3,3 bis 20 Gew.-% Acryl- und/oder Methacrylsäure,
B2) 0 bis 43 Gew.-% mindestens eines Acryl- und/oder Methacrylsäurehydroxyalkylesters,
B3) 0 bis 57 Gew.-% mindestens eines Acryl- und/oder Methacrylsäureesters eines einwertigen Alkoholes mit 1 bis 20 C-Atomen, und
B4) 0 bis 72 Gew.-% mindestens eines Vinylaromaten
besteht, wobei die Summe aus B1, B2, B3 und B4 stets 100 ergibt und die Summe der Teile der Ester B2 und B3 zweckmäßig nicht mehr als 85 Gew.-% beträgt.

6. Copolymerisat nach Anspruch 1, enthaltend Umsetzungsprodukte von Acryl- und/oder Methacrylsäure mit Komponente A in einem Anteil von 6 bis 60 Gew.-%, bezogen auf das Copolymerisat.

7. Copolymerisate nach Anspruch 1, herstellbar durch Verwendung eines oder mehrerer radikalbildender Initiatoren der Formel
R₁-O-O-R₂,
wobei
R₁ Wasserstoff oder einen linearen oder verzweigten Acylrest mit 2 bis 15 C-Atomen oder R₂ bedeutet, und
R₂ t-Amyl- oder 3-Ethyl-pent-3-yl-rest bedeutet.

8. Copolymerisate nach Anspruch 1, wobei die Initiatoren mindestens eine t-Amyl-Gruppe enthalten.

9. Copolymerisate nach Anspruch 1, wobei die Initiatoren ausgewählt sind aus tert.-Amylperoxy-2'-ethylhexanoat und Di-tert.-amyl-peroxid.

10. Verwendung von Copolymerisaten nach den Ansprüchen 1 bis 9 zur Herstellung von Überzügen.

11. Lacke, insbesondere "high-solid"-Lacke, die mindestens ein Copolymerisat gemäß Ansprüchen 1 bis 9 als Bindemittelkomponenten enthalten.

12. Lacke, die mindestens ein Copolymerisat gemäß Ansprüchen 1 bis 9 als Bindemittelkomponenten enthalten und durch Vernetzung mit Polyisocyanaten bei moderaten Temperaturen bzw. bei Raumtemperatur härten.

13. Verwendung der Copolymerisate nach Anspruch 1 bis 9 zur Herstellung von Pulverlacken.

## Claims

1. A copolymer of
A) one or more glycidyl esters of saturated aliphatic monocarboxylic acids having a tertiary or quaternary α carbon atom, and
B) at least two unsaturated copolymerizable monomers, at least one of which contains at least one COOH group,
having an OH number of from 50 to 250 mg KOH/g, a solution viscosity (50% strength, 23°C) of 15 to 2000 mPa.s, an average molecular mass (weight average) M_{w} of less than 8600 g/mol and a monomodal, narrow molecular mass distribution having a nonuniformity of less than 3.4, which can be prepared using one or more free radical-forming initiators of the formula
R₁-O-O-R₂,
where
R₁ is hydrogen, a linear or branched aliphatic acyl radical of 2 to 15 carbon atoms or is R₂, and
R₂ satisfies the formula 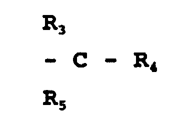 and
R₃ is a linear or branched alkyl or aralkyl radical of at least 2 carbon atoms,
R₄ and R₅ are identical or different and are a linear or branched alkyl or aralkyl radical of 1 to 15 carbon atoms.

2. A copolymer as claimed in claim 1 of
A) from 5 to 50% by weight of one or more glycidyl esters of saturated aliphatic monocarboxylic acids having a tertiary or quaternary α carbon atom which contain from 4 to 30 carbon atoms, and
B) from 95 to 50% by weight of at least two unsaturated copolymerizable monomers, one of which at least contains at least one COOH group.

3. A copolymer as claimed in claim 1, which can be prepared by initially charging component A and then reacting it with component B in the presence of at least one free radical-forming initiator.

4. A copolymer as claimed in claim 1, wherein component B comprises a mixture of one or more acrylic monomers having at least one COOH group and of one or more vinyl-aromatic hydrocarbons.

5. A copolymer as claimed in claim 1, wherein component B comprises a mixture of
B1) from 3.3 to 20% by weight of acrylic and/or methacrylic acid,
B2) from 0 to 43% by weight of at least one hydroxyalkyl ester of acrylic and/or methacrylic acid,
B3) from 0 to 57% by weight of at least one ester of acrylic and/or methacrylic acid with a monohydric alcohol of 1 to 20 carbon atoms, and
B4) from 0 to 72% by weight of at least one aromatic vinyl compound,
the sum of B1, B2, B3 and B4 always being 100 and the sum of the parts of esters B2 and B3 advantageously not being more than 85% by weight.

6. A copolymer as claimed in claim 1, comprising reaction products of acrylic and/or methacrylic acid with component A in a proportion of from 6 to 60% by weight, based on the copolymer.

7. A copolymer as claimed in claim 1, which can be prepared using one or more free radical-forming initiators of the formula
R₁-O-O-R₂,
where
R₁ is hydrogen, a linear or branched acyl radical of 2 to 15 carbon atoms or is R₂, and
R₂ is t-amyl or 3-ethylpent-3-yl radical.

8. A copolymer as claimed in claim 1, where the initiator comprises at least one t-amyl group.

9. A copolymer as claimed in claim 1, where the initiator is selected from tert-amyl peroxy-2'-ethylhexanoate and di-tert-amyl peroxide.

10. The use of a copolymer as claimed in claims 1 to 9 for the production of coatings.

11. A coating material, especially a high-solids coating material, which comprises at least one copolymer as claimed in claims to 1 to 9 as binder component.

12. A coating material which comprises at least one copolymer as claimed in claims 1 to 9 as binder component and which cures by crosslinking with polyisocyanates at moderate temperatures or at room temperature.

13. The use of a copolymer as claimed in claims 1 to 9 for the production of powder coatings.

## Revendications

1. Copolymères
A) d'un ou plusieurs esters glycidyliques d'acides monocarboxyliques aliphatiques saturés avec un atome de carbone α-tertiaire ou quaternaire et
B) d'au moins deux monomères copolymérisables insaturés dont au moins un contient au moins un groupe COOH,
avec un indice OH de 50 à 250 mg KOH/g, une viscosité en solution (à 50 %, à 23 °C) de 15 à 2 000 mPa.s, une masse molaire moyenne (moyenne en poids) Mw inférieure à 8600 g/mole et une distribution de masse molaire unimodale, étroite, avec une polydispersivité inférieure à 3,4, que l'on peut préparer par utilisation d'un ou plusieurs amorceurs formateurs de radicaux de formule
R₁-O-O-R₂,
dans laquelle
R₁ représente un atome d'hydrogène ou un reste acyle aliphatique linéaire ou ramifié avec 2 à 15 atomes de carbone ou R₂, et
R₂ répond à la formule 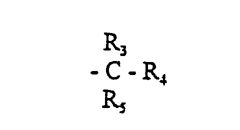 et
R₃ représente un reste alkyle ou aralkyle linéaire ou ramifié avec au moins 2 atomes de carbone,
R₄ et R₅ sont identiques ou différents et représentent un reste alkyle ou aralkyle linéaire ou ramifié avec 1 à 15 atomes de carbone.

2. Copolymères selon la revendication 1
A) de 5 à 50 % en poids d'un ou plusieurs esters glycidyliques d'acides monocarboxyliques aliphatiques saturés avec un atome de carbone α tertiaire ou quaternaire et qui contiennent de 4 à 30 atomes de carbone et
B) de 95 à 50 % en poids d'au moins deux monomères copolymérisables insaturés, dont au moins un contient au moins un groupe COOH.

3. Copolymères selon la revendication 1, que l'on peut préparer en prenant le composant A et ensuite, en faisant réagir avec le composant B en présence d'au moins un amorceur formateur de radicaux.

4. Copolymères selon la revendication 1, caractérisés en ce que le composant B est constitué d'un mélange d'un ou plusieurs monomères acryliques avec au moins un groupe COOH et un ou plusieurs hydrocarbures vinylaromatiques.

5. Copolymères selon la revendication 1, caractérisés en ce que le composant B est un mélange
B1) de 3,3 à 20 % en poids d'acide acrylique ou d'acide méthacrylique,
B2) de 0 à 43 % en poids d'un ester d'hydroxyalkyle d'acide acrylique ou d'acide méthacrylique,
B3) de 0 à 57 % en poids d'au moins un ester d'acide acrylique ou d'acide méthacrylique d'un alcool monofonctionnel avec 1 à 20 atomes de carbone et
B4) de 0 à 72 % en poids d'au moins un composé vinylaromatique,
la somme de B1, B2, B3 ou B4 étant toujours 100 et la somme des parties des esters B2 et B3 n'étant pas supérieure à 85 % en poids de façon appropriée.

6. Copolymère selon la revendication 1, contenant des produits de réaction d'acide acrylique et/ou méthacrylique avec le composant A dans une proportion de 6 à 60 % en poids par rapport au copolymère.

7. Copolymères selon la revendication 1, que l'on peut préparer en utilisant un ou plusieurs amorceurs radicalaires de formule
R₁-O-O-R₂,
R₁ représente un atome d'hydrogène ou un reste acyle linéaire ou ramifié avec 2 à 15 atomes de carbone, ou R₂, et
R₂ représente un reste t-amyle ou 3-éthyl-pent-3-yle.

8. Copolymères selon la revendication 1, où les amorceurs contiennent au moins un groupe t-amyle.

9. Copolymères selon la revendication 1, où les amorceurs sont pris parmi le peroxy-2'-éthylhexanoate de tert-amyle et le peroxyde de di-tert-amyle.

10. Utilisation de copolymères selon les revendications 1 à 9 pour préparation de revêtements.

11. Vernis, plus particulièrement vernis "high solid" qui contient au moins un copolymère selon les revendications 1 à 9 en tant que composant liant.

12. Vernis qui contient un copolymère selon les revendications 1 à 9, en tant que composant liant et que durcissent par réticulation avec des polyisocyanates à des températures modérées, respectivement à la température ambiante.

13. Utilisation des copolymères selon les revendications 1 à 9 pour la préparation de vernis en poudre.
